# EUROPÄISCHE PATENTSCHRIFT

(11) **EP 0 725 520 B1**
(45) Veröffentlichungstag und Bekanntmachung des Hinweises auf die Patenterteilung: **01.08.2001**
(21) Anmeldenummer: 96101506.2
(22) Anmeldetag: 02.02.1996
(51) Int. Cl.: H04L 12/43, H04B 1/20

(54) **Verfahren zur Übertragung von digitalen Daten**
Method for transmitting digital data
Procédé de transmission de données numériques

(30) Priorität: 02.02.1995 DE 19503210
(43) Veröffentlichungstag der Anmeldung: 07.08.1996
(73) Patentinhaber: BECKER GmbH, D-76307 Karlsbad (DE)
(72) Erfinder: Klos, Reiner, D-76275 Ettlingen (DE); Hetzel, Herbert, D-76356 Weingarten (DE); Heck, Patrick, D-76448 Durmersheim (DE)
(74) Vertreter: Patentanwälte Westphal, Mussgnug & Partner

(56) Entgegenhaltungen:
- GB-A- 2 276 796

## Beschreibung

Die vorliegende Erfindung betrifft ein Verfahren zur Übertragung von digitalen Daten über Datenleitungen zwischen Datenquellen und -senken bildenden Teilnehmern, die in einem eine Ringstruktur aufweisenden und mehrere Teilnehmer miteinander verbindenden Netzwerk aus jeweils zwischen zwei benachbarten Teilnehmern gebildeten Netzsegmenten angeordnet sind, wobei die Quelldaten im Netzwerk in einem Format übertragen werden, welches eine getaktete Folge von einzelnen in Teil-Bitgruppen unterteilten Bitgruppen gleicher Länge vorschreibt, die temporär zwei Teilnehmern im Netzwerk für eine Datenübertragung zuweisbar ist, wobei mindestens eine Teil-Bitgruppe einen Datenkanal bildet und wobei die Teil-Bitgruppen innerhalb der Bitgruppen temporär für eine Datenübertragung zwischen zwei Teilnehmern im Netzwerk segmentweise zugewiesen werden, indem für die jeweilige Datenübertragung nur die Teil-Bitgruppen der Netzsegmente belegt werden, die sich zwischen jeweiliger Datenquelle und zugehörender Datensenke befindet.

Dabei werden die Daten in einem zu einem Taktsignal synchronen kontinuierlichen Datenstrom übertragen. Das Taktsignal wird dabei von einem einzigen Teilnehmer generiert. Alle anderen Teilnehmer synchronisieren sich auf dieses Taktsignal. Davon zu unterscheiden sind rein asynchrone Datenübertragungsverfahren, wie paketorientierte Datenübertragungsverfahren z.B. ATM-Verfahren.

Verfahren dieser Art werden überall dort eingesetzt, wo mehrere elektrische und elektronische Geräte, die untereinander Informationen austauschen sollen, mittels Datenleitungen miteinander vernetzt sind. So kann beispielsweise im Audiobereich die Kommunikation zwischen miteinander vernetzten Datenquellen einerseits, wie z.B. CD-Spielern, Radioempfängern und Kassettenrecordern, und den zugehörigen Datensenken andererseits, wie z.B. Verstärker-Lautsprecher-Kombinationen, durch ein solches Verfahren gesteuert werden.

Aus GB-A-2 276 796 ist ein derartiges Verfahren zur Datenüber-tragung bekannt.

Ein erster Nachteil dieses bekannten Verfahrens zur Datenübertragung liegt darin begründet, dass die Belegung der Kanäle von einer zentralen Steuereinheit gesteuert wird. Ein zweiter Nachteil ist darin zu sehen, dass keinerlei Vorsorge für den Fall getroffen wird, dass die Datenübertragung fehlerhaft ist ober überhaupt nicht zustande kommt. Schließlich ist als dritter Nachteil zu erwähnen, dass bei Belegung aller Datenkanäle durch einen Teilnehmer eine Kommunikation zwischen weiteren Teilnehmern nicht mehr möglich ist.

Der Erfindung liegt daher die Aufgabe zugrunde, das Verfahren der eingangs genannten Art so weiterzubilden, dass die vorhandene Datenleitung und damit die möglichen Datenkanäle besser ausgenutzt werden können bzw. dass die Zahl der für eine gewünschte Übertragungskapazität erforderlichen Leitungen mit den zugehörigen Netzwerksegmenten reduziert werden kann.

Diese Aufgabe wird bei dem erfindungsgemäßen Verfahren mit den Merkmalen des Anspruchs 1 dadurch gelöst, dass von jedem Teilnehmer aus die Belegung der Teil-Bitgruppen und damit der oder die Datenkanäle in Datenflussabwärtsrichtung frei wählbar ist und dass ein Fehlersignal von einem Teilnehmer erzeugt und zu einer Datenquelle zur Initiierung einer erneuten, allerdings modifizierten Datenübertragung oder zur Ausgabe einer Fehlermeldung geschickt wird, wenn ein Verbindungsaufbau zwischen dieser Datenquelle und einer addressierten Datensenke nicht oder nur mit einer ungenügenden Teil-Bitgruppen-Zahl möglich ist.

Bei der Erfindung erfolgt die segmentweise Belegung der Teil-Bitgruppen und damit die des entsprechenden Datenkanals durch die jeweilige Datenquelle, welche die Daten absendet und die zugehörige Datensenke, indem die Datenquelle diesen Kanal für die datenflussabwärts von ihr gelegenen Segmente als belegt kennzeichnet und die Datensenke die Belegung dieses Kanals für die auf sie folgenden Segmente wieder aufhebt. Die Verwaltung der Datenübertragung, also die Belegung der Datenkanäle, erfolgt nicht zentral, sondern alle Teilnehmer im Netzwerk sind an der Verwaltung in der angegebenen Weise beteiligt. Dies hat den Vorteil, dass kein zusätzliches Gerät für die Verwaltung erforderlich ist. Zudem ist der Verwaltungsaufwand verringert, da jeder Teilnehmer nur seine lokalen Teil-Bitgruppenzuordnungen und damit die lokalen Datenkanalzuordnungen kennen muss. Eine zentrale Verwaltungseinheit müsste dagegen alle Teil-Bitgruppenzuordnungen und Datenkanalzuordnungen in allen Segmenten kennen und hier für einen entsprechenden Speicherplatz aufweisen. Um einen Ausbau des Netzwerks zu ermöglichen, müsste eine solche zentrale Verwaltungseinheit zudem auf eine Maximalbelegung ausgelegt sein, die die erforderliche Speicherkapazität weiter erhöht. Dies ist bei der erfindungsgemäßen dezentralen Verwaltung dagegen nicht nötig. Es ist also grundsätzlich ein beliebiger Ausbau des Netzwerks möglich, ohne dass hierfür bereits im Basisnetzwerk Speicherkapazität bereit gestellt werden müsste. Belegte Datenkanäle erhalten eine Kennzeichnung, welche die Datenquelle angibt, von welcher die Daten abgeschickt wurden.

Ist ein Verbindungsaufbau zwischen einer Datenquelle und der zugehörigen Datensenke nicht oder nur mit ungenügender Teil-Bitgruppenzahl oder Kanalzahl möglich, so wird von einem Teilnehmer ein Fehlersignal erzeugt und an die jeweilige Datenquelle und gegebenenfalls an die gemeinsame Steuereinheit geschickt. Hierdurch wird eine fehlerhafte Teil-Bitgruppenzuordnung und Kanalzuordnung schnell festgestellt und dies der Datenquelle bzw. der gemeinsamen Steuereinheit mitgeteilt. Nach einer solchen Mitteilung kann nun entschieden werden, ob die Datenübertragung auf weniger Teil-Bitgruppen erfolgen soll oder ob andere Datenübertragungen unterbrochen werden sollen, um ausreichend Teil-Bitgruppen oder Datenkanäle zur Verfügung zu stellen. Es kann aber auch eine Fehlermeldung an den Benutzer ausgegeben werden, die auf die Unmöglichkeit der Datenübertragung hinweist.

Die für eine Datenübertragung zwischen zwei Teilnehmern im Ring verwendeten Teil-Bitgruppen und Datenkanäle werden aus den vorhandenen Teil-Bitgruppen und Datenkanälen frei gewählt. Diese Maßnahme ermöglicht eine optimale Ausnutzung der vorhandenen Teil-Bitgruppen und damit der Datenkanäle, weil, wenn eine Teil-Bitgruppe oder ein Datenkanal in den Netzwerksegmenten zwischen Datenquelle und Datensenke bereits belegt ist, auf eine andere, in diesen Segmenten noch nicht belegte Teil-Bitgruppe und damit ggf. auf einen anderen Datenkanal ausgewichen werden kann. In allen Segmenten können somit alle Teil-Bitgruppen und damit alle Datenkanäle vorteilhaft für beliebige Datenübertragungen benutzt werden.

Die segmentweise Kanalbelegung und die spätere Freigabe belegter Kanäle wird nach einer Ausgestaltung der Erfindung durch eine Steuereinheit eingeleitet, welche den Einleitungs- bzw. Freigabebefehl durch das Netzwerk an den jeweiligen Teilnehmer schickt, der daraufhin die Kanalbelegung bzw. -freigabe ausführt.

Der Befehl wird bevorzugt von Teilnehmer zu Teilnehmer übertragen, wobei jeder Teilnehmer prüft, ob er in dem jeweiligen Befehl als Datenquelle oder -senke bezeichnet ist und ggf. die entsprechende Funktion auslöst. Die Datenquelle, die den Einleitungsbefehl erhält, belegt also die benötigte Zahl von Kanälen, versieht diese mit ihrer Adresse und gibt den so geänderten Befehl an den nachfolgenden Teilnehmer weiter. Die Datensenke verbindet die ihr zugeordneten Kanäle mit ihrem entsprechenden Eingang, hebt die Kanalbelegung auf und schickt den so geänderten Befehl ebenfalls weiter, der dann bei der Steuereinheit endet. Alle anderen Teilnehmer geben den Befehl nur weiter und kennzeichnen ggf. die belegten Kanäle.

Als Steuereinheit dient bevorzugt eine gemiensame Steuereinheit mit Benutzerinterface. Eine solche gemeinsame Steuereinheit kann beispielsweise eine sogenannte Audio-Video-Kontrolleinheit, kurz AVC, sein, wie sie heutzutage in Netzwerken häufig eingesetzt wird.

Nach einer Ausgestaltung der Erfindung schickt die jeweilige Datensenke nach erfolgreicher Teil-Bitgruppenbelegung und damit Kanalbelegung bzw. nach erfolgter Teil-Bitgruppenbelegung und Kanalfreigabe ein Bestätigungssignal an die zugehörige Datenquelle und ggf. an die gemeinsame Steuereinheit. Auf diese Weise wird die erfolgreiche Kanalbelegung bzw. Kanalfreigabe überwacht und eine Kanalzuordnung abgeschlossen. Die Datenübertragung kann daraufhin aufgenommen werden, und die gemeinsame Steuereinheit kann weitere Teil-Bitgruppenbelegungen und damit Kanalbelegungen initiieren.

Nach einer weiteren Ausgestaltung der Erfindung kann diese Freiheit der Teil-Bitgruppenwahl und damit Kanalwahl auch dazu benutzt werden, um auf einer bestimmten Teil-Bitgruppen und damit auf einem bestimmten Datenkanal ankommende Daten auf eine andere Teil-Bitgruppe und damit auf einem anderen Datenkanal weiterzuleiten. Erhält ein Teilnehmer also beispielsweise auf der von ihm selbst bereits belegten Teil-Bitgruppe und damit auf dem Datenkanal 1 Daten, die nicht für ihn bestimmt sind, sondern weitergeleitet werden sollen, so kann er diese auf andere freie Teil-Bitgruppen und damit auf einem anderen Kanal, beispielsweise dem zweiten Datenkanal, weiterleiten. Auf diese Weise werden die Datenkanäle in den Segmenten noch besser ausgenutzt, die Datenübertragungskapazität des Netzwerks also weiter erhöht.

Ein Ausführungsbeispiel der Erfindung ist in der Zeichnung dargestellt und wird nachfolgend beschrieben. Es zeigen
- Figur 1: ein Netzwerk mit Ringstruktur in einem bestimmten Datenübertragungszustand und
- Figur 2: dasselbe Netzwerk in einem anderen Datenübertragungszustand.

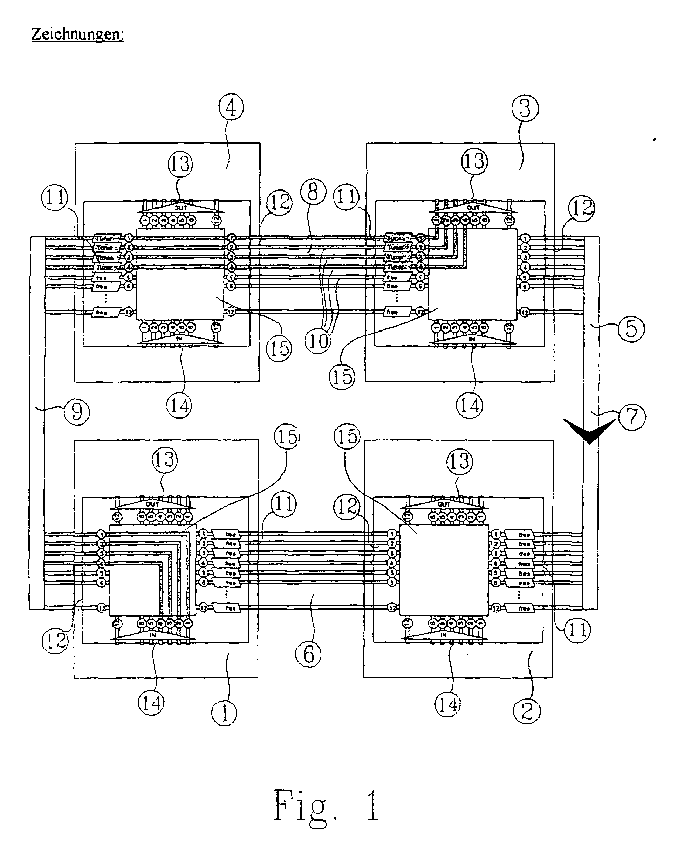

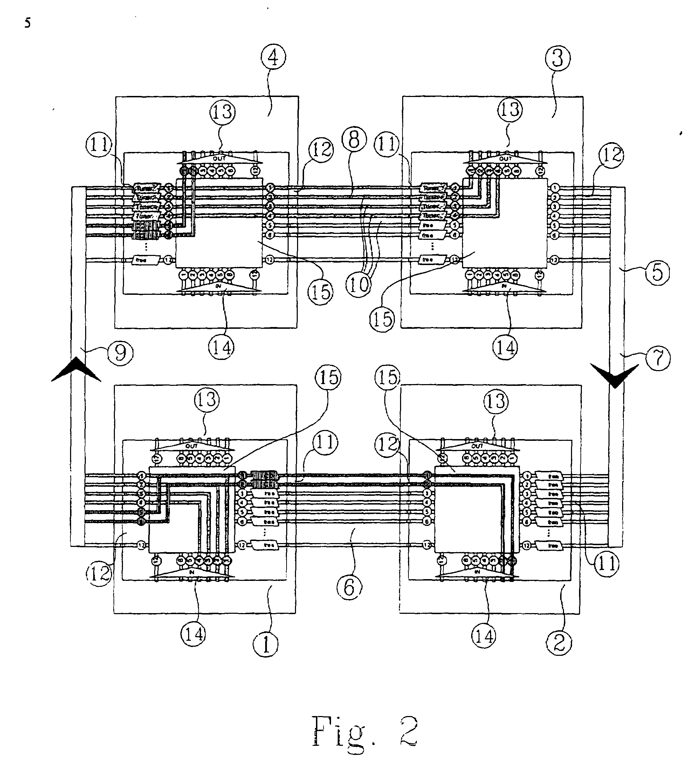

In den Figuren 1 und 2 ist ein Netzwerk dargestellt, welches vier ringförmig verbundene Teilnehmer 1 bis 4 enthält. Bei diesen vier Teilnehmern handelt es sich beispielsweise um einen Rundfunkempfänger 1 und einen CD-Spieler 2 als Datenquellen sowie um einen Verstärker 3 und eine Audio-Video-Kontrolleinheit 4 als Datensenken. Alle Datenquellen können aber gleichzeitig auch Datensenken und alle Datensenken können gleichzeitig auch Datenquellen sein, beispielsweise für Steuerdaten.

Die vier Teilnehmer 1 bis 4 sind über eine Datenleitung 5 miteinander verbunden, bei der es sich beispielsweise um einen Lichtwellenleiter handelt. Die Datenleitung 5 setzt sich aus vier Segmenten 6, 7, 8 und 9 zusammen, die jeweils durch die Abschnitte der Datenleitung 5 zwischen zwei der vier Teilnehmer 1 bis 4 gebildet werden. Die Datenübertragung erfolgt in der durch Pfeile gekennzeichneten Richtung.

In dem dargestellten Beispiel stehen für die Datenübertragung über die Datenleitung 5 zwölf Teil-Bitgruppen und damit Datenkanäle zur Verfügung, die hier zur Veranschaulichung als zueinander parallel verlaufende Leitungen 10 dargestellt sind, obwohl es sich tatsächlich um Teil-Bitgruppen in einer getakteten Folge von seriell übertragenen Bitgruppen gleicher Länge handelt.

Jeder der Teilnehmer 1 bis 4 hat einen Netzdateneingang 11 und einen Netzdatenausgang 12 sowie einen internen Dateneingang 14 und einen internen Datenausgang 13. Über eine eine Zuordnungsvorschrift enthaltende Steuereinheit 15 können alle zwölf Datenkanäle einzeln zwischen den Ein- und Ausgängen 11, 12, 13 und 14 eines Teilnehmers 1 bis 4 beliebig verbunden werden.

In dem in Figur 1 dargestellten Beispiel sind die ersten vier Kanäle, welche Teil-Bitgruppen entsprechen, des internen Ausgangs 13 des Teilnehmers 1 mit dem Netzausgang 12 dieses Teilnehmers verbunden. Von diesem Teilnehmer ab sind also die ersten vier Teil-Bitgruppen und damit Datenkanäle des Netzwerks belegt, was durch eine Schwärzung der entsprechenden Leitungen 10 angedeutet ist. In dem datenflussabwärts des Teilnehmers 1 gelegenen Teilnehmer 4 sind die erstzen vier Datenkanäle des Netzeingangs mit den ersten vier Teil-Bitgruppen und damit Datenkanälen des Netzausgangs verbunden, d.h. die Daten werden durch diesen Teilnehmer einfach durchgeschleust. In dem nächsten Teilnehmer 3 sind die ersten vier Teil-Bitgruppen und damit Datenkanäle des Netzeingangs 11 mit den ersten vier Teil-Bitgruppen und damit Datenkanälen des internen Eingangs 13 dieses Teilnehmers verbunden. Datenflussabwärts von diesem Teilnehmer sind die ersten vier Teil-Bitgruppen und damit Datenkanäle des Netzwerks also wieder freigegeben, dargestellt als helle Leitung 10.

Der Teilnehmer 1, bei dem es sich im dargestellten Beispiel um einen Rundfunkempfänger handelt, stellt also die Datenquelle dar, die beispielsweise Stereo-Audiodaten über die ersten vier Teil-Bitgruppen und damit Datenkanäle des Netzwerks zu dem Teilnehmer 3 überträgt, bei dem es sich in dem dargestellten Beispiel um einen Verstärker handelt. Der Teilnehmer 1 belegt also die ersten vier Datenkanäle des Netzwerks in den auf ihn folgenden Netzwerksegmenten 9 und 8, der Teilnehmer 3 gibt diese Teil-Bitgruppen und damit Datenkanäle für die sich an ihn anschließenden Netzsegmente 7 und 6 wieder frei. Zwischen dem Teilnehmer 3 und dem Teilnehmer 1 sind daher wieder alle Teil-Bitgruppen und damit Datenkanäle frei und stehen für andere Datenübertragungen zur Verfügung.

Figur 2 zeigt eine Datenübertragungssituation, in welcher ebenfalls vom Teilnehmer 1 Stereo-Audiodaten über die ersten vier Teil-Bitgruppen und damit Datenkanäle des Netzwerks zum Teilnehmer 3 übertragen werden. Zusätzlich findet eine Datenübertragung vom Teilnehmer 2 zum Teilnehmer 4 statt. Der Teilnehmer 2, bei dem es sich um einen CD-Wechsler handelt, überträgt beispielsweise Naviationsdaten zu der Audio-Video-Kontrolleinheit 4. Er belegt hierfür die ersten beiden Teil-Bitgruppen und damit Datenkanäle des Netzwerks, was wiederum durch eine Schwärzung der entsprechenden Leitungen 10 angedeutet ist, indem er die ersten beiden Teil-Bitgruppen und damit Datenkanäle seines internen Ausgangs 13 mit den ersten beiden Teil-Bitgruppen und damit Datenkanälen seines Netzausgangs 12 verbindet. Der datenflussabwärts vom CD-Wechsler 2 gelegene Rundfunkempfänger 1 empfängt diese Daten ebenfalls auf den ersten beiden Teil-Bitgruppen und damit Datenkanälen seines Netzeingangs 11. Der Teilnehmer 1 stellt fest, dass die ersten beiden Teil-Bitgruppen und damit Datenkanäle seines Netzausgangs 12 bereits belegt sind und legt die vom CD-Wechsler 2 kommenden Daten auf die nächsten beiden freien Teil-Bitgruppen und damit Datenkanäle 5 und 6 seines Netzausgangs 12.

Die Audio-Video-Kontrolleinheit 4, für welche die vom CD-Wechsler 2 übertragenen Daten bestimmt sind, verbindet die Teil-Bitgruppen und damit Datenkanäle 5 und 6 ihres Netzein- gangs 11 mit den ersten Teil-Bitgruppen und damit Datenkanälen ihres internen Dateneingangs 14. Damit ergibt sich folgendes Bild: In dem Netzsegment 6 zwischen dem CD-Wechsler 2 und dem Rundfunkempfänger 1 sind die ersten beiden Teil-Bitgruppen und damit Datenkanäle belegt, während alle anderen Teil-Bitgruppen und damit Datenkanäle frei sind.

Im Netzsegment 9 zwischen dem Rundfunkempfänger 1 und der Audio-Video-Kontrolleinheit 4 sind die ersten sechs Teil-Bitgruppen und damit Datenkanäle belegt, während die übrigen sechs Teil-Bitgruppen und damit Datenkanäle frei sind. Im Netzsegment 8 zwischen der Audio-Video-Kontrolleinheit 4 und dem Verstärker 3 sind die ersten vier Teil-Bitgruppen und damit Datenkanäle belegt, während die übrigen acht Teil-Bitgruppen und damit Datenkanäle frei sind, und im letzten Netzsegment 7 zwischen dem Verstärker 3 und dem CD-Wechsler 2 sind alle zwölf Teil-Bitgruppen und damit Datenkanäle frei. Auf diese Weise ergibt sich also eine optimale Ausnutzung der für eine Datenübertragung zur Verfügung stehenden Teil-Bitgruppen und damit Datenkanäle im Datennetz. Nur zwischen der Datenquelle und der zugehörigen Datensenke sind die für eine bestimmte Datenübertragung erforderlichen Teil-Bitgruppen und damit Datenkanäle tatsächlich belegt. In allen übrigen Segmenten sind diese Teil-Bitgruppen und damit Datenkanäle dagegen frei und stehen für andere Datenübertragungen zur Verfügung. In dem Segment 7 zwischen dem Verstärker 3 und dem CD-Wechsler 2 könnten beispielsweise in dem in Figur 2 dargestellten Beispiel alle Teil-Bitgruppen und damit alle Datenkanäle für eine Datenübertragung benutzt werden, obwohl die Teil-Bitgruppen und damit die Datenkanäle 1 bis 6 in anderen Segmenten des Netzwerks belegt sind.

Damit die von einer Datenquelle abgeschickten Daten die richtige Datensenke erreichen und die bei der Übertragung verwendeten Teil-Bitgruppen und damit Kanäle von dieser wieder freigegeben werden können, werden die Daten mit einer Absenderadresse versehen.

Die Einleitung einer Datenübertragung kann entweder von jedem Teilnehmer 1 bis 4 selbst ausgehen oder aber von einer gemeinsamen Steuereinheit, bevorzugt der Audio-Video-Kontrolleinheit 4. In diesem Falle schickt die Audio-Video-Kontrolleinheit 4 einen Steuerbefehl durch das Netz, in welchem die herzustellende Datenverbindung übermittelt wird. Die angesprochene Datenquelle belegt die erforderlichen Teil-Bitgruppen und damit Datenkanäle im Netz und überträgt die Daten an die Datensenke, nachdem diese die Herstellung der Datenverbindung bestätigt hat. Die Datensenke gibt die für die Datenübertragung zwischen ihr und der Datenquelle benutzten Teil-Bitgruppen und damit Kanäle für die auf sie folgenden Netzsegmente frei.

Treten bei einer versuchten Herstellung einer Datenverbindung Probleme dadurch auf, dass in einem bestimmten Segment nicht mehr genügend Teil-Bitgruppen und damit Datenkanäle für die gewünschte Datenverbindung frei sind, so gibt der Teilnehmer im Netzwerk, der dies feststellt, eine entsprechende Fehlermeldung an die Datenquelle und gegebenenfalls an die gemeinsame Steuereinheit ab. Die Datenquelle bzw. die gemeinsame Steuereinheit kann dann darauf reagieren, indem beispielsweise eine Datenübertragung mit weniger Teil-Bitgruppen und damit Kanälen initiiert wird oder eine Freigabe anderer Teil-Bitgruppen und damit anderer Kanäle initiiert wird oder eine Fehlermeldung an den Benutzer ausgegeben wird.

Auch die Beendigung einer Datenübertragung wird durch einen entsprechenden Steuerbefehl initiiert, der über die Datenquelle oder die gemeinsame Steuereinheit über das Netz an die jeweiligen Teilnehmer übertragen wird. Die Datenquelle beendet die Datenübertragung und gibt die für die Datenübertragung belegten Teil-Bitgruppen und damit Kanäle frei, die Datensenke stellt die Beendigung der Datenübertragung fest und überträgt einen Bestätigungsbefehl an die Datenquelle und gegebenenfalls an die gemeinsame Steuereinheit.

Durch die erfindungsgemäße dezentrale Verwaltung der Teil-Bitgruppen und der Kanalbelegung wird eine optimale Ausnutzung der Übertragungskapazität des ringförmigen Netzwerks erzielt.

## Patentansprüche

1. Verfahren zur Übertragung von digitalen Daten über Datenleitungen zwischen Datenquellen und -senken bildenden Teilnehmern (1, 2, 3, 4), die in einem eine Ringstruktur aufweisenden und mehrere Teilnehmer (1, 2, 3, 4) miteinander verbindenden Netzwerk aus jeweils zwischen zwei benachbarten Teilnehmern (1, 2, 3, 4) gebildeten Netzsegmenten (6, 7, 8, 9) angeordnet sind, wobei die Quelldaten im Netzwerk in einem Format übertragen werden, welches eine getaktete Folge von einzelnen in Teil-Bitgruppen unterteilten Bitgruppen gleicher Länge vorschreibt, die temporär zwei Teilnehmern im Netzwerk für eine Datenübertragung zuweisbar ist, wobei mindestens eine Teil-Bitgruppe (10) einen Datenkanal bildet und wobei die Teil-Bitgruppen (10) innerhalb der Bitgruppen temporär für eine Datenübertragung zwischen zwei Teilnehmern (1, 2, 3, 4) im Netzwerk segmentweise zugewiesen werden, indem für die jeweilige Datenübertragung nur die Teil-Bitgruppen (10) der Netzsegmente (6, 7, 8, 9) belegt werden, die sich zwischen jeweiliger Datenquelle und zugehöriger Datensenke befindet,
**dadurch gekennzeichnet**, dass
von jedem Teilnehmer (1, 2, 3, 4) aus die Belegung der Teil-Bitgruppen (10) und damit der oder die Datenkanäle in Datenflussabwärtsrichtung frei wählbar ist, und dass ein Fehlersignal von einem Teilnehmer erzeugt und zu einer Datenquelle zur Initiierung einer erneuten, allerdings modifizierten Datenübertragung oder zur Ausgabe einer Fehlermeldung geschickt wird, wenn ein Verbindungsaufbau zwischen dieser Datenquelle und einer adressierten Datensenke nicht oder nur mit einer ungenügenden Teil-Bitgruppen-Zahl möglich ist.

2. Verfahren nach Anspruch 1,
**dadurch gekennzeichnet**, dass die segmentweise Belegung einer Teil-Bitgruppe (10) durch die jeweilige Datenquelle, welche die Daten absendet, und die zugehörige Datensenke erfolgt, indem die Datenquelle diese Teil-Bitgruppe für die datenflussabwärts von ihr gelegenen Segmente (6 bis 9) als belegt kennzeichnet und die Datensenke diese Teil-Bitgruppe für die auf sie folgenden Segmente (6 bis 9) wieder als frei kennzeichnet.

3. Verfahren nach Anspruch 1 oder 2,
**dadurch gekennzeichnet**, dass belegte Teil-Bitgruppen (10) eine Kennzeichnung erhalten, welche die Datenquelle angibt, von welcher die Daten abgeschickt wurden.

4. Verfahren nach einem der vorhergehenden Ansprüche,
**dadurch gekennzeichnet**, dass die segmentweise Teil-Bitgruppen-Belegung und/oder die Teil-Bitgruppen-Freigabe durch eine Steuereinheit (4) eingeleitet werden, welche den Einleitungs- bzw. Freigabebefehl durch das Netzwerk an den jeweiligen Teilnehmer (1 bis 4) schickt, der daraufhin die Teil-Bit-Gruppen-Belegung bzw. -freigabe ausführt.

5. Verfahren nach Anspruch 4,
**dadurch gekennzeichnet**, dass der Einleitungs- und der Freigabebefehl ausgehend von der Steuereinheit (4) von Teilnehmer (1 bis 4) zu Teilnehmer (1 bis 4) übertragen werden und dass jeder Teilnehmer (1 bis 4) prüft, ob er in dem jeweiligen Befehl als Datenquelle oder -senke bezeichnet ist und gegebenenfalls die entsprechende Funktion auslöst.

6. Verfahren nach Anspruch 4 oder 5,
**dadurch gekennzeichnet**, dass eine gemeinsame Steuereinheit (4), welche insbesondere ein Benutzerinterface aufweist, zum Beispiel eine sogenannte Audio-Video-Kontrolleinheit (AVC), als Steuereinheit dient.

7. Verfahren nach einem der vorhergehenden Ansprüche,
**dadurch gekennzeichnet**, dass die jeweilige Datensenke ein Bestätigungssignal nach erfolgreicher Teil-Bitgruppen-Belegung bzw. nach erfolgter Teil-Bitgruppen-Freigabe an die zugehörige Datenquelle und ggf. an die gemeinsame Steuereinheit (4) schickt.

8. Verfahren nach einem der vorhergehenden Ansprüche,
**dadurch gekennzeichnet**, dass ein Teilnehmer (1 bis 4) Daten, die er auf einer bestimmten Teil-Bitgruppe (10) des Netzwerks erhält, auf einer anderen Teil-Bitgruppe (10) weiterleiten kann, wenn diese bestimmte Teil-Bitgruppe (10) von diesem Teilnehmer (1 bis 4) bereits für eine Datenübertragung belegt wurde.

## Claims

1. Method of transmitting digital data along data lines between users (1, 2, 3, 4), which users are formed by data sources and data sinks are arranged in a network having a ring structure which connects a plurality of users (1, 2, 3, 4) together and which comprises network segments (6, 7, 8, 9) each formed between two adjoining users (1, 2, 3, 4), the source data on the network being transmitted in a format which prescribes a timed sequence of individual bit-groups of equal length which are divided into part bit-groups and which can be temporarily allotted to two users on the network for a data transmission, with at least one part bit-group (10) forming a data channel and with the part bit-groups (10) within the bit-groups being temporarily allotted for a data transmission between two users (1, 2, 3, 4) on the network segment by segment, this being done by, for the given data transmission, allocating only those part bit-groups (10) which belong to the network segments (6, 7, 8, 9) which is¹ situated between the data source concerned at the time and the associated data sink,
**characterised in that**
the allocation of the part bit-groups (10) and hence the data channel or channels in the downstream direction of data flow can be freely selected from each user (1, 2, 3, 4) and in that an error signal is generated by a user and is sent to a data source to initiate a fresh but modified data transmission or to cause an error message to be emitted when a connection cannot be made between the data source concerned and a data sink which is addressed or can be made with only an insufficient number of part bit-groups.

2. Method according to claim 1,
**characterised in that**
the allocation segment by segment of a part bit-group (10) is performed by the particular data source which transmits the data and by the associated data sink by having the data source mark the part bit-group concerned as allocated for the segments (6 to 9) situated downstream of it in the direction of data flow and by having the data sink mark the bit group as released again for the segments (6 to 9) which follow it.

3. Method according to claim 1 or 2,
**characterised in that** allocated part bit-groups (10) are given a marking which indicates the data source from which the data was sent.

4. Method according to any of the foregoing claims,
**characterised in that** the part bit-group allocation segment by segment and/or the part bit-group release are initiated by a control unit (4) which sends the initiation or releasing command to the given user (1 to 4) by means of the network, which user then performs the part bit-group allocation or release.

5. Method according to claim 4,
**characterised in that** the initiation and releasing commands coming from the control unit (4) are transmitted from user (1 to 4) to user (1 to 4) and in that each user (1 to 4) checks whether it is identified as data source or data sink in the given command and triggers the appropriate function where necessary.

6. Method according to claim 4 or 5,
**characterised in that** a common control unit (4) which has in particular a user interface, such as a so-called audio-video control unit (AVC) for example, is used as the control unit.

7. Method according to any of the foregoing claims,
**characterised in that** the data sink involved sends a confirmation signal to the associated data source and where necessary to the common control unit (4) after successful part bit-group allocation and after the part bit-group release has taken place.

8. Method according to any of the foregoing claims,
**characterised in that** a user (1 to 4) can pass on data which it receives in a given part bit-group (10) of the network to another part bit-group (10) when the said given part bit-group (10) has already been allocated by the user in question (1 to 4) for a data transmission.

## Revendications

1. Procédé de transmission de données numériques par des lignes de données entre des participants (1, 2, 3, 4) formant des sources de données, et des puits de données, avec un réseau ayant une structure en anneau et reliant plusieurs participants (1, 2, 3, 4), ce réseau étant formé de segments (6, 7, 8, 9) entre chaque fois deux participants voisins (1, 2, 3, 4),
les sources de données assurant une transmission dans le réseau suivant un format prescrivant une succession cadencée de différents groupes de bits subdivisés en groupes partiels de bits de même longueur, attribués temporairement à deux participants du réseau pour une transmission de données,
au moins un groupe partiel de bits (10) formant un canal de données et les groupes partiels de bits (10) parmi les groupes de bits, étant attribués temporairement pour une transmission de données entre deux participants (1, 2, 3, 4) du réseau, suivant une attribution par segment, en ce que, pour chaque transmission de données, seuls sont occupés les groupes partiels de bits (10) des segments de réseau (6, 7, 8, 9) qui se trouvent entre la source de données respectives et le puits de données associées,
caractérisé en ce que
chaque participant (1, 2, 3, 4) peut choisir librement l'occupation des groupes partiels de bits (10) et du ou des canaux de données dans le sens du flux de données vers l'aval, et
un participant génère un signal de défaut envoyé vers une source de données pour initialiser une nouvelle transmission de données toutefois modifiée, ou pour émettre un signal de défaut si l'établissement d'une liaison entre cette source de données et un puits de données adressé ne peut se faire ou n'est réalisable qu'avec un nombre insuffisant de groupes partiels de bits.

2. Procédé selon la revendication 1,
caractérisé en ce que
l'occupation par segment d'un groupe partiel de bits (10) se fait par la source de données respective qui émet des données et le puits de données correspondant, en ce que la source de données caractérise comme occupé, ce groupe partiel de bits pour les segments (6 à 9) situés en aval de la source et le puits de données caractérise comme de nouveau libres les groupes partiels de bits pour les segments qui suivent (6 à 9).

3. Procédé selon l'une quelconque des revendications 1 ou 2,
caractérisé en ce que
les groupes partiels de bits (10), occupés, reçoivent une caractéristique indiquant la source de données qui a envoyé les données.

4. Procédé selon l'une quelconque des revendications précédentes,
caractérisé en ce que
l'occupation par segment de groupes partiels de bits et/ou la libération par segment de groupes partiels de bits, est faite par une unité de commande (4) qui envoie l'ordre d'occupation ou de libération par le réseau vers les participants respectifs (1-4) qui exécutent ensuite l'occupation de groupes partiels de bits ou leur libération.

5. Procédé selon la revendication 4,
caractérisé en ce que
l'ordre d'occupation et de libération émis par l'unité de commande (4) est transmis d'un participant (1-4) à un autre participant (1-4), et chaque participant (1-4) vérifie s'il est désigné dans l'ordre correspondant comme source de données ou comme puits de données, puis exécute le cas échéant la fonction correspondante.

6. Procédé selon l'une quelconque des revendications 4 ou 5,
caractérisé en ce qu'
une unité de commande (4) commune, qui présente notamment une interface d'utilisateur, par exemple une unité de commande audio-vidéo (AVC), sert d'unité de commande.

7. Procédé selon l'une quelconque des revendications précédentes,
caractérisé en ce que
le puits de données respectif envoie un signal de confirmation après une occupation de groupes partiels de bits réussie, ou après une libération de groupes partiels de bits vers la source de données correspondante et, le cas échéant, vers l'unité de commande commune (4).

8. Procédé selon l'une quelconque des revendications précédentes,
caractérisé en ce qu'
un participant (1-4) peut transmettre à un autre groupe partiel de bits (10) les données qu'il reçoit sur un certain groupe partiel de bits (10) du réseau, si ce groupe partiel de bits (10), déterminé, a déjà été occupé par ce participant (1-4) pour une transmission de données.
